Europäisches Patentamt

European Patent Office

Office européen des brevets

(19)

(11) Publication number: **0 248 529 B1**

## EUROPEAN PATENT SPECIFICATION

(12)

(45) Date of publication of patent specification: **30.09.92**  (51) Int. Cl.⁵: **G02C 5/02**

(21) Application number: **87303913.5**

(22) Date of filing: **30.04.87**

(54) **Eyeglass assembly.**

(30) Priority: **01.05.86 US 858387**

(43) Date of publication of application:
**09.12.87 Bulletin 87/50**

(45) Publication of the grant of the patent:
**30.09.92 Bulletin 92/40**

(84) Designated Contracting States:
**DE ES FR GB IT**

(56) References cited:
**DE-A- 3 503 644**
**US-A- 4 129 362**
**US-A- 4 610 519**

(73) Proprietor: **Hyman, Roger L.**
**5249 North 35th Street**
**Milwaukee Wisconsin 53209(US)**

(72) Inventor: **Hyman, Roger L.**
**5249 North 35th Street**
**Milwaukee Wisconsin 53209(US)**

(74) Representative: **Brunner, Michael John et al**
**GILL JENNINGS & EVERY 53-64 Chancery Lane**
**London WC2A 1HN(GB)**

Rank Xerox (UK) Business Services

## Description

The present invention relates to an eyeglass assembly and more particularly to a sunglass assembly that permits the inter-changing of lens holding frames.

High fashion sunglasses have been marketed that utilise various colours for the lens holding frames and that utilise a variety of geometric shapes for the lens holding frames. These fashion sunglasses are extremely expensive and thus owning a number of pairs in various shapes and colours is prohibitive.

A number of U.S. patents show the use of interchangeable lens holding frames and patents such as US-A-4129362 and Design Patent no: 147168 show the use of inter-connected and pivoting frame members. However, all of the prior art eyeglasses and sunglasses which utilise interchangeable frames or pivoting frames have exposed connectors and/or pivot points which detract from the aesthetics of the eyeglasses and thus are not suitable for high fashion eyeglasses.

US-A-4129362 discloses an eyeglass structure which has two lens holding frame members having a band connecting the temple pieces. The frame members also joined by a male/female connection in the nose piece zone, although there is no nose piece as such.

It is therefore desirable to provide a pair of high fashion eyeglasses or sunglasses that will have individually replaceable frame members so that a number of geometric shapes and/or colours may be combined to provide a unique appearance.

According to the present invention an eyeglass assembly comprising two lens holding frame members each having a temple piece pivotally attached to and extending rearwardly from an edge portion of the frame member, the frame members being releasably connected to each other at a connection point in the nose piece zone by means of a pin projecting from the nose piece zone of one frame member into a pin receiving hole within the nose piece zone of the other frame member, is characterised in that:

the two frame members are separate and distinct so as to be individually replaceable; one of the frame members has a curved portion which cooperates with a portion of the other frame member to define a complete nose bridge; and in that the pin and hole connection is such that the two frame members will be flush against each other upon being connected and no portion of the connection will be visible.

Preferably locking means are provided to prevent the rotation of the frame members about the connection point.

Examples of eyeglass assemblies in accordance with the invention are illustrated in the accompanying drawings. In the drawings:

Figure 1 is a perspective view of a pair of eyeglasses constructed according to the present invention;

Figure 2 is an enlarged view of the connection in the nose piece zone with parts broken away;

Figure 3 is a perspective view with parts broken away of an alternative embodiment; and,

Figure 4 is a section to an enlarged scale taken along line 4 - 4 of Figure 3.

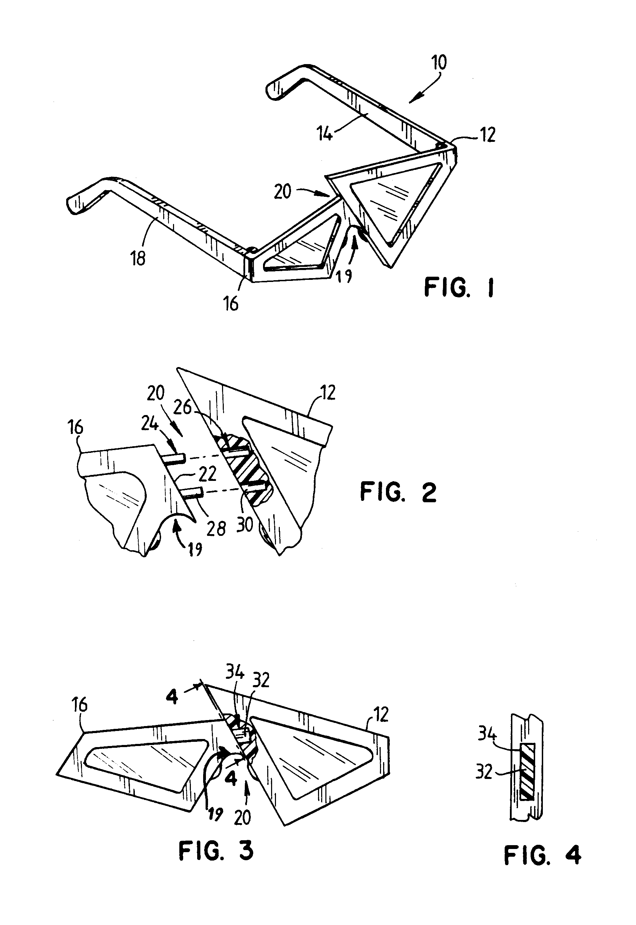

As seen in Figure 1, an eyeglass or sunglass assembly 10 consists of a left hand frame member 12 having a temple piece 14 pivotally connected to and extending rearwardly from the outer edge of frame member 12 and a right hand frame member 16 that also has a temple piece 18 pivotally connected and rearwardly extending from an outer edge of frame member 16. The right hand frame member 16 is provided with a curved portion 19 which defines a nose bridge portion and cooperates with the left hand frame member 12 to define a complete nose bridge.

Left and right hand frame members are connected in the nose piece zone 20 by means of connection 22 having male and female mating portions 24 and 26. In the embodiment shown in Figure 2, right hand frame member 16 is provided with projecting pin 24 that extends outwardly from and substantially parallel to the nose piece zone of right hand frame member 16. Left hand frame member 12 is provided with a hole 26 for accepting pin 24. Hole 26 is dimensioned so as to provide a friction fit for pin 24 in order to maintain pin 24 within hole 26. Pin 24 may be provided with ridges or other projections and hole 26 may be provided with grooves or notches so as to provide a ridge/groove type detent in order to maintain pin 24 within hole 26.

Connector pin 24, when inserted into hole 26 is completely disposed within hole 26 so no portion of pin 24 remains visible and the frame members abut and are flush against each other.

As seen in Figure 2, a second locking pin 28 is provided in nose piece zone 20. Pin 28 mates with hole 30 in a manner similar to that of pin 24 and hole 26 and prevents rotation of frame members 12 and 16 about the connection point.

Figure 3 and Figure 4 illustrate an alternative embodiment in which the connection in nose piece zone 20 is accomplished by means of a multi-sided pin or projection 32 that mates with a hole 34 having a similar geometry. This embodiment eliminates the need for locking pin 28 since the geometry of pin 32 prevents its rotation within hole 34 and thus the rotation of frame members 12 and 16 about the connection point is prohibited.

As illustrated by the drawings, the glasses can be formed by a pair of frame members having dissimilar geometric shapes joined by means of the connection. The present invention thus provides for the joining of either symetrical or asymetrical lens holding frames in a single eyeglass assembly.

The present invention thus provides an eyeglass assembly having readily inter-changeable lens holding frames while providing for the joining of the frames in such a manner that the frames are flush against each other and lying in the same vertical plane when joined and the connector joining the frames is not visible.

## Claims

1. An eyeglass assembly (10) comprising two lens holding frame members (12,16) each having a temple piece (14,18) pivotally attached to and extending rearwardly from an edge portion of the frame member (12,16), the frame members being releasably connected to each other at a connection point (22) in the nose piece zone (20) by means of a pin (24,32) projecting from the nose piece zone of one frame member (16) into a pin receiving hole (26,34) within the nose piece zone of the other frame member (12), characterised in that:
the two frame members (12, 16) are separate and distinct so as to be individually replaceable; one (16) of the frame members has a curved portion (19) which cooperates with a portion of the other frame member (12) to define a complete nose bridge; and in that the pin (24,32) and hole (26,34) connection is such that the two frame members (12, 16) will be flush against each other upon being connected and no portion of the connection will be visible.

2. An assembly according to claim 1, further comprising locking means (28,32) to prevent rotation of the frame members about the connection point.

3. An assembly according to claim 2, wherein the locking means comprises a second pin (28) projecting from one (16) of the frame members and a pin receiving hole (30) in the other frame member (12), the second pin (28) and hole (30) being so disposed on the frame members that upon connection of the frame members the pin (28) engages the hole (30) and prevents the rotation of the frame members about said connection point.

4. An assembly according to claim 1, wherein the connecting pin is in the form of solid projection (32) having a plurality of definitive sides, the pin (32) mating with a hole (34) of similar geometry so that rotation of the pin (32) within the hole (34) is prevented.

5. An assembly according to any of the preceding claims, wherein the two frame members (12,16) are of dissimilar geometric shapes.

## Patentansprüche

1. Ein Brillengestell (10) mit zwei Rahmengliedern (12,16) zum Halten von Linsen, die jeweils mit einem Brillenbügel (14,18) versehen sind, der schwenkbar an einem Kantenabschnitt des Rahmengliedes (12,16) angebracht ist und sich von da nach rückwärts erstreckt, wobei die Rahmenglieder lösbar an einem Verbindungspunkt (22) in der Stegzone (20) mit Hilfe eines Stiftes (24,32) miteinander verbunden sind, der von der Stegzone des einen Rahmengliedes (16) in ein Stiftaufnahmeloch (26, 34) in der Stegzone des anderen Rahmengliedes (12) hinein vorsteht, dadurch **gekennzeichnet,** daß
die beiden Rahmenglieder (12,16) so getrennt und individualisiert sind, daß sie einzeln auswechselbar sind; das eine Rahmenglied (16) einen gekrümmten Abschnitt (19) aufweist, der mit einem Abschnitt an dem anderen Rahmenglied (12) zusammenwirkt, um einen kompletten Steg zu bilden, und daß die Stift- (24,32) und Lager- (26,34) Verbindung so gestaltet ist, daß die beiden Rahmenglieder (12,16) bündig aneinanderliegen, wenn sie miteinander verbunden sind, und kein Abschnitt der Verbindung sichtbar ist.

2. Ein Gestell nach Anspruch 1, das außerdem Sperrmittel (28,32) umfaßt, um eine Drehung der Rahmenglieder um den Verbindungspunkt zu verhindern.

3. Ein Gestell nach Anspruch 2, bei dem die Sperrmittel einen zweiten Stift (28), der von einem (16) der Rahmenglieder absteht, sowie ein Stiftaufnahmeloch (30) in dem anderen Rahmenglied (12) umfassen, wobei der zweite Stift (28) und das Loch (30) so an den Rahmengliedern angebracht sind, daß bei einer Verbindung der Rahmenglieder der Stift (28) in das Loch (30) eingreift und die Drehung der Rahmenglieder um diesen Verbindungspunkt verhindert.

4. Ein Gestell nach Anspruch 1, bei dem der Verbindungsstift die Form eines massiven Vorsprungs (32) mit einer Vielzahl von definierten Seiten hat, wobei der Stift (32) so mit einem Loch (34) ähnlicher Geometrie zusammenpaßt, daß eine Drehung des Stiftes (32) in dem Loch (34) verhindert wird.

**5.** Ein Gestell nach einem der vorhergehenden Ansprüche, bei dem die beiden Rahmenglieder (12,16) unterschiedliche geometrische Form haben.

## Revendications

**1.** Monture de lunette (10) comportant deux faces de monture ayant chacune une branche (14, 18) fixée de façon pivotante à et s'étendant vers l'arrière depuis une partie de bord de la face de monture (12, 16), les faces de monture étant reliées de façon détachable l'une à l'autre au niveau d'un point de raccordement (22) dans la zone d'arcade au moyen d'une broche (24, 32) dépassant de la zone d'arcade d'une face de monture (16) dans un trou de réception de broche (26, 34) dans la zone d'arcade de l'autre face de monture (12), caractérisée en ce que :

les deux faces de monture (12, 16) sont séparées et distinctes de façon à pouvoir être remplacées individuellement; une (16) des faces de monture possède une partie courbe (19) qui coopère avec une partie de l'autre face de monture (12) afin de définir une arcade complète; et en ce que le raccord à broche (24, 32) et trou (26, 34) est tel que les deux faces de monture (12, 16) affleurent l'une contre l'autre en étant reliées et qu'aucune partie du raccord n'est visible.

**2.** Monture selon la revendication 1, comportant en outre des moyens de verrouillage (28, 32) destinés à empêcher la rotation des faces de monture autour du point de raccordement.

**3.** Monture selon la revendication 2, dans laquelle les moyens de verrouillage comportent une deuxième broche (28) dépassant de l'une (16) des faces de monture et un trou de réception de broche (30) dans l'autre face de monture (16), la deuxième broche (28) et le trou (30) étant disposés sur les faces de monture de telle sorte que, lors du raccordement des faces de monture, la broche (28) engage le trou (30) et empêche la rotation des faces de monture autour dudit point de raccordement.

**4.** Monture selon la revendication 1, dans laquelle la broche de raccordement se présente sous la forme d'une extension pleine (32) ayant plusieurs côtés définis, la broche (32) correspondant à un trou (34) de géométrie similaire de telle sorte que la rotation de la broche (32) dans le trou (34) est empêchée.

**5.** Monture selon l'une quelconque des revendications précédentes, dans laquelle les deux faces de monture (12, 16) sont de formes géométriques dissemblables.

FIG. 1

FIG. 2

FIG. 3

FIG. 4